# EUROPÄISCHE PATENTSCHRIFT

(11) **EP 1 467 477 B1**
(45) Veröffentlichungstag und Bekanntmachung des Hinweises auf die Patenterteilung: **20.07.2011**
(21) Anmeldenummer: 03008299.4
(22) Anmeldetag: 10.04.2003
(51) Int. Cl.: H02P 1/26

(54) **Verfahren zum Erzeugen eines hohen Momentes bei einem mehrphasigen Elektromotor**
Method for generating a high torque in a polyphase induction motor
Méthode pour générer un couple élevé dans un moteur à induction polyphasé

(43) Veröffentlichungstag der Anmeldung: 13.10.2004
(73) Patentinhaber: GRUNDFOS A/S, DK-8850 Bjerringbro (DK)
(72) Erfinder: Llves, Lasse, 00940 Helsinki (FI); Yli-Korpela, Heikki, 01680 Vantaa (FI); Vadstrup, Pierre, 8381 Tilsit (DK); Nybo, Peter Junklas, 8900 Randers (DK)
(74) Vertreter: Vollmann, Heiko

(56) Entgegenhaltungen:
- WO-A-90/08424
- US-A1- 2002 093 305
- ALLEN J P C: "Starting now-a review of reduced voltage AC motor starters" TEXTILE, FIBER AND FILM INDUSTRY TECHNICAL CONFERENCE, 1992., IEEE 1992 ANNUAL CHARLOTTE, NC, USA 6-7 MAY 1992, NEW YORK, NY, USA,IEEE, US, 6. Mai 1992 (1992-05-06), Seiten 1-1-110, XP010061787 ISBN: 0-7803-0596-5

## Beschreibung

Die Erfindung betrifft ein Verfahren zum Ansteuern eines mehrphasigen Elektromotors, insbesondere eines Asynchronmotors.

Aus US 5,969,497 ist es bekannt, einen mehrphasigen Asynchronmotor so anzusteuern, dass dieser mit erhöhtem Moment anfährt, ohne die Versorgungsspannung zu erhöhen. Dabei wird vor dem Anfahren zunächst durch entsprechende Wicklungsansteuerung ein magnetischer Fluss in eine erste Richtung erzeugt, wonach dann ein magnetischer Fluss in eine zweite, hierzu um 0° bis 180° versetzte Richtung erzeugt wird, um ein erhöhtes Anfahrmoment zu erzeugen. Der Motor wird sodann im normalen Betriebsmodus weiter hochgefahren. Die dort beschriebene Steuerelektronik ist aufwändig und teurer.

Aus US-A-2002/0093305 ist ein insoweit günstigeres Verfahren bekannt, bei welchem der Motor zum Zwecke des Anfahrens so angesteuert wird, dass eine Magnetisierung entsteht, wie sie beim Synchronmotor mit Permanentmagnetrotor bekannt ist. Es wird also gezielt ein erhöhtes Anfahrmoment erzeugt, um den Motor aus dem Stand möglichst schnell ggf. auch unter Last anzufahren.

Zwar kann mit diesen bekannten Verfahren das Anfahrmoment das bei Asynchronmotoren vergleichsweise niedrig ist, ohne Erhöhung der Versorgungsspannung gesteigert werden, doch reicht diese magnetische Vorkonditionierung des Motors zum Anfahren eines blockierten Motors häufig nicht aus.

Vor diesem Hintergrund liegt der Erfindung die Aufgabe zugrunde, ein Verfahren zum Ansteuern eines mehrphasigen Elektromotors insbesondere eines Asynchronmotors zu schaffen, mit dem ein festsitzender Motor angefahren werden kann.

Diese Aufgabe wird gemäß Erfindung durch die in Anspruch 1 angegebenen Merkmale gelöst. Dabei wird der Motor in einem ersten Schrift so angesteuert, dass eine Magnetisierung in eine erste Richtung erfolgt, um dann in einem zweiten Schritt so angesteuert zu werden, dass eine Magnetisierung in eine zweite, sich von der ersten Richtung unterscheidende Richtung erfolgt. Die Magnetisierung des zweiten Schritts erfolgt dabei derart, dass auf den Rotor ein im Vergleich zum normalen getrieb erhöhtes Moment wirkt. Die Schritte 1 und 2 werden dann so lange wiederholt, bis das erhöhte Moment nicht mehr benötigt wird oder die thermische Belastung des Motors dies nicht langer erlaubt.

Das erfindungsgemäße Verfahren wird zum Anfahren des Motors eingesetzt. Die Anzahl der Wiederholungen der Schritte 1 und 2 ist praktisch nur durch die thermische Belastbarkeit des Motors begrenzt, wird jedoch für eine Rotorumdrehung bei entgegengesetzter Drehrichtung vorgesehen.

Die Magnetisierung des Motors in eine erste bzw, eine sich davon unterscheidende zweite Richtung erfolgt derart, dass Wicklungen des Motors gezielt mit der einen oder anderen Halbwelle der Versorgungsspannung beaufschlagt werden, also nicht, wie im Betrieb üblich, mit einer Wechselspannung, sondern mit einer Gleichspannung. Die Beaufschlagung erfolgt zweckmäßigerweise über elektronische Schalter, welche die Versorgungsspannung in Abhängigkeit der Nulldurchgänge und der Polarität zeitweise mit einer oder mehreren Phasen des Motors verbindet bzw. trennt, Bevorzugt werden hierzu Triacs eingesetzt, da diese zum einen kostengünstig im Vergleich zu anderen elektronischen Schaltem sind und zum anderen den Vorteil haben, dass sie bei vereinfachter Ansteuerung lediglich einzuschalten, nicht Jedoch auszuschalten sind. Das Ausschalten erfolgt beim Triac selbsttätig, wenn der Stromfluss seine Richtung ändert. Dadurch, dass der Stromfluss üblicherweise dem Spannungsverlauf der Versorgungsspannung nacheilt, erfolgt bei dieser selbsttätigen Ausschaltung diese zwar genau gekommen ein wenig zu spät, doch reicht für die Vielzahl der Anwendungsfälle eine solche (vergleichsweise ungenaue) Ansteuerung aus, um den gewünschten, eingangs genannten Zweck zu erreichen. Es versteht sich, dass beispielsweise beim Einsatz von Thyristoren, bei denen der Ein- und Ausschaltzeitpunkt durch die Steuerung vorgegeben wird, eine vergleichsweise exaktere Steuerung erzielt werden kann, was jedoch aufgrund der zum Ende einer Halbwelle abfallenden Spannung und damit auch Stroms praktisch kaum momentenerhöhenden Einfluss hat.

Wenn der Motor aufgrund erhöhter Belastung stehen bleibt, wird, dann wenn der Motor stehen geblieben ist, die Ansteuerung für eine vorbestimmte Schrittfolge derart erfolgen, dass ein erhöhtes Moment engegen der vorherigen Laufrichtung erzeugt wird, wonach der Motor dann angehalten und wiederum mit der ursprünglichen Laufrichtung angesteuert wird. Hierdurch wird der Rotor nach dem "festfahren" zunächst ein Stück zurückgefahren, um dann mit normalem oder ggf auch wiederum erhöhtem Moment in der ursprünglichen. Laufrichtung anzufahren. Dieses Zurückfahren des Motors mit erhöhtem Moment ist insbesondere für Aggregate wie beispielsweise Abwasserpumpenaggregate. Häckselwerke oder dergleichen zweckmäßig. Bevorzugt erfolgt die Ansteuerung mit erhöhtem Moment in Richtung entgegen der ursprünglichen Laufrichtung über eine Anzahl von Schritten, die einer Rotorumdrehung entsprechen. Bei einer solchen Ansteuerung ist gewährleistet, dass der Rotor beim nachfolgenden Starten in Ursprungsrichtung zunächst einmal nahezu eine ganze Drehung laufen kann, bevor er auf das Hindernis stößt. Es ist somit sichergestellt, dass zumindest ein Teil der wirkenden Massenträgheitsmomente überwunden ist, wenn der Rotor die Stellung erreicht hat, in der das Hindernis zu überwinden ist. Dies kann ggf. entsprechend zu variieren sein, wenn zwischen Rotor und dem Werkzeug (sei es ein Laufrad, ein Messer oder dergleichen ein Getriebe angeordnet list.

Um sicherzustellen, dass bei der Magnetisierung im zweiten Schrift ein möglichst hohes Moment erzeugt und die thermische Belastung durch die Magnetisierung gering gehalten wird, ist es zweckmäßig, bei der Magnetisierung im zweiten Schritt diese in einer um mindestens 90° und höchstens 180° versetzten Richtung zur Magnetisierungsrichtung im ersten Schritt erfolgen zu lassen.

Ein dreiphasiger Asynchronmotor wird vorteilhaft gemäß der Erfindung dadurch mit einem erhöhten Moment angesteuert, dass zunächst die Magnetisierung in die erste Richtung erfolgt, indem die erste und dritte Phase mit dem Versorgungsnetz verbunden werden, wonach zur Magnetisierung in die zweite Richtung die erste und zweite Phase oder die zweite und dritte Phase mit dem Versorgungsnetz verbunden werden, und zwar jeweils für eine positive bzw. negative Halbwelle der Versorgungsspannung. Bei Verwendung von Triacs als elektronische Schalter können, wie eingangs dargelegt, die Ausschaltvorgänge selbsttätig durch die Bauteile erfolgen, wenn der Strom Null wird bzw. seine Riehtung ändert.

Zur Durchführung des erfindungsgemäßen Verfahrens ist ein n-phasiger Asynchronmotor vorgesehen, bei dem in n oder n-1 Phasen ein elektronischer Schalter sowie eine Steuerung, welche die Schalter in Abhängigkeit des Betriebszustandes des Motors steuert, vorgesehen sind. Bei geeigneter Ansteuerung ist beispielsweise bei einem dreiphasigen Motor lediglich für zwei Phasen ein elektronischer Schalter vorzusehen, da das erfindungsgemäße Verfahren allein durch Schalten von zwei Phasen der insgesamt drei Phasen durchführbar ist. Bevorzugt werden jedoch in allen Phasen Schalter vorgesehen, da dann ungeachtet des erfindungsgemäßen Verfahrens der Motor mit Hilfe dieser Schalter auch vollständig vom Versorgungsnetz getrennt werden kann, so dass diese Schalter auch gleichzeitig zum Ein- bzw. Ausschalten des Motors dienen.

Um zu gewährleisten, dass die Einschaltung der Phasen, d. h. die Verbindung der einzelnen Phasen mit dem Versorgungsnetz zu dem gewünschten Zeitpunkt erfolgt, ist es zweckmäßig, steuerungsseitig Mittel zum Erfassen zumindest des Vorzeichens der zwischen zwei Phasen anliegenden Spannung vorzusehen. Bevorzugt ist die Steuerung integraler Bestandteil des Motors, d. h. Teil der Motorelektronik. Das erfindungsgemäße Verfahren kann dann steuerungsseitig implementiert werden, und zwar je nach Art der Steuerung digital oder analog. Um die Stromaufnahme zu begrenzen, können nach dem Nulldurchgang der Versorgungsspannung ein oder mehrere Versorgungspausen vorgesehen sein, derart, dass die erfindungsgemäße Steuerung zusätzlich als Phasenanschnittssteuerung oder als Softstarter in Form einer Sanftanlaufschaltung (soft-start-circuit) arbeitet. Sanftanlaufschaltungen sind üblicherweise mit Phasenanschnittsteuerungen versehen, die eine Begrenzung der Stromaufnahme herbeiführen und den Motor sanft anlaufen lassen. Eine solche Steuerung kann mit geringem technischen Aufwand bereitgestellt werden und beispielsweise im Klemmenkasten des Motors integriert sein. Ein besonderer Vorteil dieser Ausbildung ist, dass insbesondere bei größeren Maschinen eine Stern-/Dreieckschaltung entfallen kann, da das Anfahren mit erhöhten Moment über die erfindungsgemäße Ansteuerung erfolgt und über die Phasenanschnittsteuerung eine wirksame Strombegrenzung erfolgt. Die Phasenanschnittsteuerung kann vorteilhaft mit denselben elektronischen Schaltern, insbesondere Triacs umgesetzt werden, welche für das Anfahren mit erhöhtem Moment vorgesehen sind. Ein solcher Motor kann beispielsweise Teil eines Pumpenaggregats bilden, vorzugsweise einer Abwasserpumpe oder einer Exzenterschneckenpumpe (Monopumpe), bei der dann, wenn die Pumpe aufgrund gröberer Verunreinigungen in der Drehzahl abfällt oder zum Stillstand kommen sollte, die Steuerung mit Hilfe des erfindungsgemäßen Verfahrens eingreift, um ein Anhalten des Laufrads und damit des Rotors zu verhindern bzw. nach Anhalten des Laufrads dieses wieder nach dem Zurückfahren mit erhöhtem Moment in normaler Richtung in Gang zu setzen. Insbesondere bei einem solchen Aggregat kann die Motorsteuerung durch einen Teil der ohnehin vorhandenen, typischerweise digitalen Pumpensteuerung bilden. Bei Abwasserpumpen sind diese Steuerungen typischerweise Niveausteuerungen und im Kreislaufsystemen typischerweise Volumenstrom- oder Differenzdrucksteuerungen.

Ein solcher Asynchronmotor bildet vorteilhaft Teil eines Pumpenaggregats, insbesondere einer Abwasserpumpe, kann jedoch auch Teil einer Zerkleinerungsvorrichtung, beispielsweise eines Schredders, sei es für Gartenabfälle, für Kunststoff, für Papier oder eine für die Zerkleinerung von Küchenabfällen im Küchenabfluss vorgesehene Vorrichtung, sein. Auch für den Antrieb einer Transporteinrichtung (Förderschnecke, Förderband) kann ein solcher Asynchronmotor eingesetzt werden, der das erfindungsgemäße Verfahren durch eine entsprechend ausgebildete Steuerung selbsttätig ausführt. Auch andere Antriebseinrichtungen, welche im Belastungsfalle kurzzeitig mit einem erhöhten Moment anzusteuern sind oder bei Stillstand zunächst in Gegenrichtung mit einem erhöhten Moment angesteuert werden, um dann in normaler Richtung weiter zu laufen, können mit dem erfindungsgemäßen Asynchronmotor ausgestattet werden. Vorteilhaft ist, dass das erfindungsgemäße Verfahren keine erhöhte Leistungsaufnahme erfordert, da das Moment zwar erhöht wird aber die Drehzahl auf einen neuen und kleineren subharmonischen Wert abfällt.

Die Erfindung ist nachfolgend anhand eines in der Zeichnung dargestellten Ausführungsbeispiels näher erläutert. Es zeigen:
- Fig. 1: das Schaltbild eines dreiphasigen Asynchronmotors mit drei elektronischen Schaltern,
- Fig. 2: sechs magnetische Flussvektoren, welche die Magnetisierung des Motors in sechs verschiedene Richtung darstellen,
- Fig. 3: eine Tabelle, welche die jeweiligen Schaltstellungen von zwei Schaltern zur Ausführung des erfindungsgemäßen Verfahrens sowie zum Ein- und Ausschalten darstellt,
- Fig. 4: die Darstellung der Schaltvorgänge anhand der Versorgungsspannungen eines Drehstromnetzes und
- Figuren 5 und 6: zwei Beispiele für die Magnetisierung in zwei Richtungen, um den Motor in die eine bzw. in die andere Richtung mit erhöhtem Moment anlaufen zu lassen.

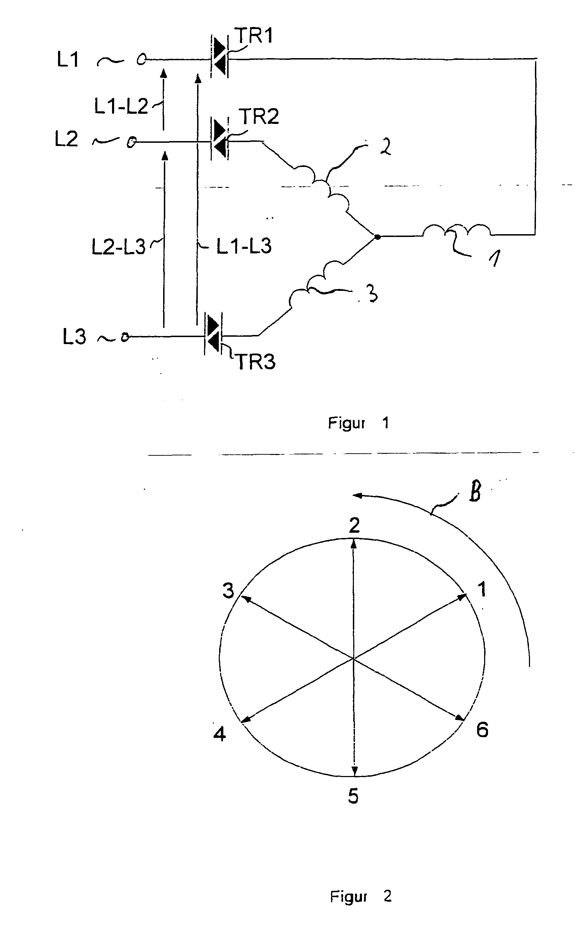

Das Schaltbild gemäß Fig. 1 zeigt einen dreiphasigen Asynchronmotor, dessen Phasen/Wicklungen mit 1, 2 und 3 gekennzeichnet sind. Die Anschlüsse der Phasen an das Drehstromversorgungsnetz sind mit L1, L2 und L3 gekennzeichnet, die zwischen diesen Anschlüssen anliegenden Spannungen mit L1-L2, L2-L3 und L1-L3. Jede der Motorphasen/wicklungen ist über einen elektronischen Schalter in Form eines Triacs mit dem zugehörigen Anschluss L verbunden. Die Wicklung 1 ist über den Schalter TR 1 mit dem Anschluss L1 leitungsverbunden, die Wicklung 2 über den Schalter TR2 mit dem Anschluss L2 und die Wicklung 3 über den Schalter TR3 mit dem Anschluss L3. Im Übrigen sind die Wicklungen 1, 2 und 3 in Sternschaltung geschaltet, wie aus Fig. 1 hervorgeht.

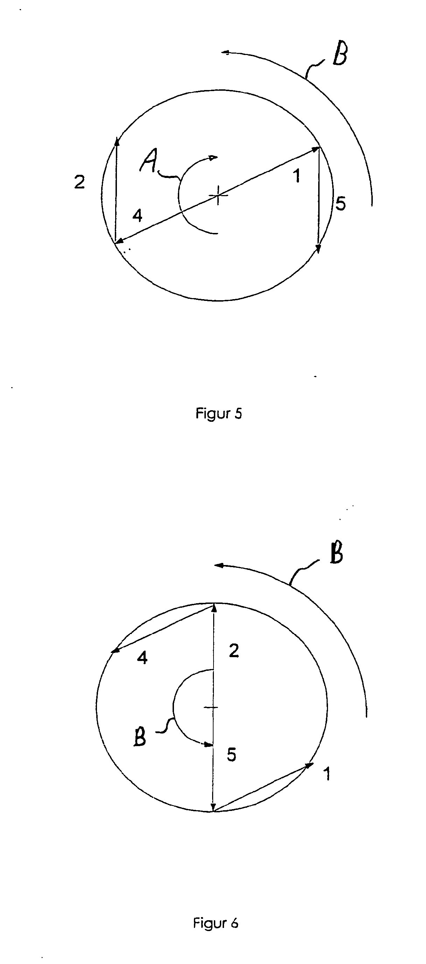

Wie Fig. 2 verdeutlicht, kann der anhand von Fig. 1 dargestellte Motor in insgesamt sechs verschiedene Richtungen magnetisiert werden. Die in Fig. 2 dargestellten Pfeile stellen jeweils den Flussvektor mit der jeweiligen Richtung dar. Zum Ansteuern des Motors mit einem erhöhten Moment erfolgt zunächst gemäß Fig. 5 eine Magnetisierung in Richtung 1, (erster Schritt) wonach eine Magnetisierung in Richtung 5 erfolgt (zweiter Schritt). Durch letztere entsteht ein Moment in Richtung A, wie Fig. 5 verdeutlicht. Nach diesen ersten beiden Schritten erfolgt eine Magnetisierung in Richtung 4, wonach dann wiederum in einem zweiten Schritt eine Magnetisierung in Richtung 2 erfolgt, wodurch wiederum ein Moment in Drehrichtung A erzeugt wird. Diese Doppelschritte können beliebig oft wiederholt werden, bevorzugt jedoch nur für eine Umdrehung, also einen Drehwinkel von 360°, um dann den Motor wieder in normaler Drehrichtung B anzusteuern. Dieses Rückwärtsfahren mit erhöhtem Moment reicht in der Regel aus, um den festsitzenden Rotor zu lösen, um dann beim normalen Anfahren oder gegebenenfalls erst beim Anfahren mit erhöhtem Moment das Hindernis zu überwinden. Danach wird der Motor in den Normalbetrieb überführt.

Gemäß Fig. 6 erfolgt zunächst eine Magnetisierung in Richtung 2 und nachfolgend in Richtung 4, so dass ein erhöhtes Moment in Richtung B erzeugt wird. Nachfolgend erfolgt dann eine Magnetisierung in Richtung 5 in einem ersten Schritt sowie nachfolgend in einem zweiten Schritt in Richtung 1, wodurch wiederum ein erhöhtes Moment in Richtung B erzeugt wird. Dieses erhöhte Moment unterstützt hier die normale Drehrichtung B.

Mit der vorbeschriebenen Ansteuerung wird die Drehzahl auf nominal 33 1/3 Prozent abgesenkt und das Drehmoment entsprechend erhöht. Hierdurch steigt allerdings die thermische Belastung des Motors, was jedoch durch die nur kurzzeitige Belastung praktisch keine Rolle spielt. Die vorgenannte Ansteuerung kann mit nur zwei Schaltern, nämlich TR1 und TR2 realisiert werden. Bevorzugt erfolgt die Ansteuerung jedoch mit drei Schaltern, da dann eine gleichmäßigere thermische Belastung der Wicklungen möglich ist und darüber hinaus der Motor auch vollständig vom Versorgungsnetz getrennt werden kann. Die Ansteuerung mit erhöhtem Moment erfolgt vorzugsweise so, dass eine gleichmäßige Belastung sämtlicher Phasen bzw. Wicklungen gewährleistet ist, also beispielsweise durch Magnetisierungen 1,5, 4,2, 6,4, 3,1 oder 5,3, 2,6, 4,2, 1,5 oder 3,1, 6,4, 2,6, 5,3 (siehe Fig. 2).

Bei einer Ansteuerung mit nur zwei Schaltern TR2 und TR3 erfolgt die Magnetisierung 1,5, 4,2, 1,5, 4,2 usw. oder 4,2, 1,5, 4,2, 1,5 usw. Der Schalter TR3 ist dann nicht erforderlich, allerdings ist die thermische Belastung des Motors dann ungleichmäßig auf die einzelnen Wicklungen verteilt.

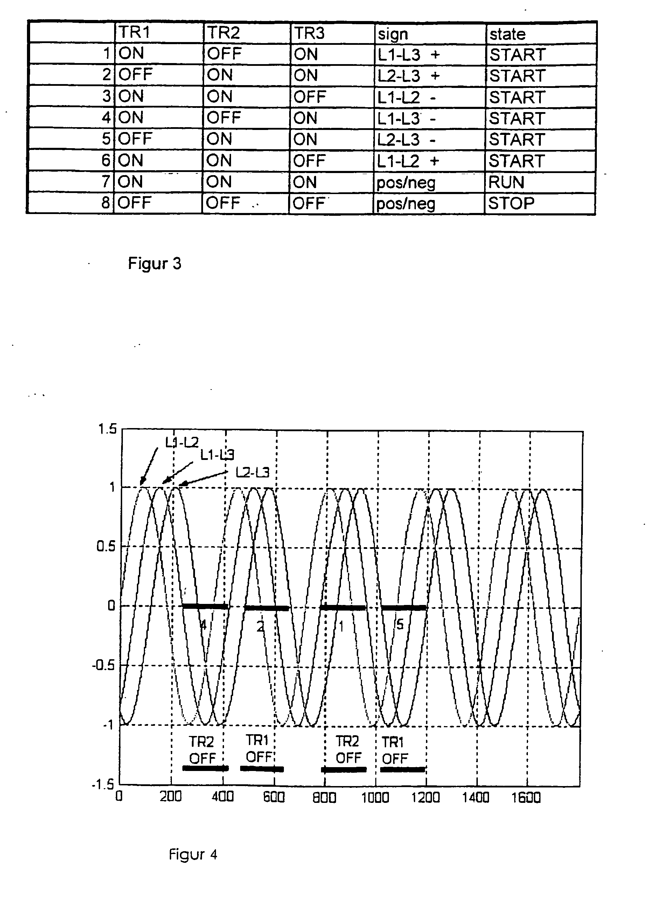

Wie eine solche Ansteuerung zur Erzeugung eines erhöhten Momentes in die eine oder andere Richtung A bzw. B erfolgen kann, ist anhand der Figuren 3 und 4 dargestellt. Die Fig. 3 zeigt anhand einer Tabelle, wie die Flussvektoren 1 bis 6 gemäß Fig. 2 mit Hilfe der elektronischen Schalter TR1 bis TR3 erzeugt werden können. Dabei steht ON für den Status durchgeschaltet und OFF für den Status gesperrt jedes Schalters. Unter SIGN ist aufgeführt, welches Vorzeichen die Spannungen L1-L3, L2-L3 sowie L1-L2 der Versorgungsspannung bei dieser Schaltstellung haben müssen, um diese Magnetisierung bzw. das Anlaufen mit erhöhtem Moment bzw. das Weiterlaufen mit erhöhtem Moment zu erzeugen. In dieser Tabelle ist unter Ziffer 7 die Schaltstellung angegeben, welche dem Motorbetrieb entspricht, in dem die Wicklungen 1 bis 3 mit dem Versorgungsnetz verbunden sind, unter Ziffer 8 ist die Schaltstellung dargestellt, in der der Motor vollständig vom Netz getrennt ist.

Der magnetische Flussvektor 1 wird erzeugt, indem die Schalter TR1 und TR3 durchgehend geschaltet sind, während der Schalter TR2 gesperrt geschaltet ist, bei positiver Spannung L1-L3. Der Vektor 2 wird erzeugt, indem die Schalter TR2 und TR3 durchgeschaltet und TR1 sperrend geschaltet sind, bei positiven Vorzeichen der Spannung L2-L3. Der Vektor 3 wird erzeugt, indem die Schalter TR 1 und TR2 durchgehend geschaltet sind, während der Schalter TR3 sperrend angesteuert ist, bei negativen Vorzeichen der Spannung L1-L2. Die Flussvektoren 4 bis 6 ergeben sich entsprechend der Tabelle gemäß Fig. 3. Wie diese Tabelle verdeutlicht, können die Vektoren 1, 2 und 4, 5 erzeugt werden, ohne den Schalter TR3 vorzusehen, da dieser in allen vier Schaltstellungen durchgeschaltet ist. Mit welchen Spannungen die Motorwicklungen 1, 2, 3 bei der Erzeugung der Flussvektoren 4, 2, 1 und 5 beaufschlagt werden, ist anhand von Fig. 4 im Einzelnen dargestellt.

In Fig. 4 ist die Ansteuerung dargestellt, welche erforderlich ist, um die Flussvektoren 4, 2, 1 und 5 nacheinander zu erzeugen. Die Schaltstellungen sind dabei in der Tabelle gemäß Fig. 3 definiert. Um zunächst einmal den Flussvektor 4 zu erzeugen ist es erforderlich, dass die Spannung L1-L3 negativ wird. Um eine volle Halbwelle ausnutzen zu können, wartet man zunächst bis zu einem Nulldurchgang, nachdem L1-L3 negativ wird. Dies ist, wie in Fig. 4 ersichtlich, auf der horizontalen Zeitachse etwa bei 220 der Fall. Nachdem Nulldurchgang der Spannung L1-L3 werden die Schalter TR1 und TR3 eingeschaltet, wohingegen der Schalter TR2 ausgeschaltet bleibt. Nachdem die Spannung L1-L3 dann erneut die Nulllinie auf der Zeitachse bei etwa 410 durchtritt, wird unmittelbar danach auch der Strom in den entsprechenden Wicklungen seine Richtung ändern, wodurch die Schalter TR1 und TR3 selbsttätig öffnen.

Es wird nachfolgend der Flussvektor 2 erzeugt, allerdings erst, wenn die Spannung L2-L3 nach dem Nulldurchgang positives Vorzeichen aufweist. Dies ist etwa bei 460 der Fall. Dann werden die Schalter TR2 und TR3 leitend geschaltet, wohingegen der Schalter TR2 in Sperrstellung verbleibt. Dies wiederum solange, bis die Halbwelle durchschritten ist, also die Spannung L2-L3 ihr Vorzeichen ändert, wonach kurzzeitig danach der Strom abfällt und die Schalter TR2 und TR3 selbsttätig sperren. Es sind nunmehr die Flussvektoren 4 und 2 hintereinander erzeugt worden, wie dies auch in Fig. 5 dargestellt ist, wodurch der Motor mit erhöhten Moment die in Richtung A beaufschlagt wird. Um dann den Motor erneut in diese Richtung mit einem erhöhten Moment zu beaufschlagen werden hier die Flussvektoren 1 und 5 nacheinander folgend erzeugt, wie dies analog der Flussvektoren 4 und 2 erfolgt und in Fig. 4 dargestellt ist.

## Patentansprüche

1. Verfahren zum Ansteuern eines mehrphasigen Elektromotors, insbesondere eines Asynchronmotors, bei dem der Motor zur Erzeugung eines erhöhten Moments durch folgende Schritte angesteuert wird:
- In einem ersten Schritt erfolgt eine Magnetisierung des Motors in eine erste Richtung
- In einem zweiten Schritt erfolgt eine Magnetisierung des Motors in eine zweite, sich von der ersten Richtung, unterscheidende, Richtung, derart, dass ein erhöhtes Moment erzeugt wird,
wobei die Schritte eins und zwei zur Erzeugung eines erhöhten Motormoments wiederholt werden.
**dadurch gekennzeichnet, dass** die Ansteuerung des Motors beim Anlauf erfolgt, wenn der Motor aufgrund erhöhter Belastung stehen bleibt, wobei dann die Ansteuerung des Motors derart erfolgt, dass zunächst ein erhöhtes Moment entgegen der vorherigen Laufrichtung erzeugt wird, wonach der Motor angehalten und wiederum mit der ursprünglichen Laufrichtung angesteuert wird

2. Verfahren nach Anspruch 1, **dadurch gekennzeichnet, dass** die erste und zweite Magnetisierungsrichtung um mindestens 90° und höchstens 180° zueinander versetzt sind.

3. Verfahren nach Anspruch 1 oder 2, **dadurch gekennzeichnet, dass** die Ansteuerung über elektronische Schalter, vorzugsweise Triacs erfolgt, welche die Versorgungswechseispannung in Abhängigkeit der Nulldurchgänge und der Polarität der Versorgungsspannung zeitweise mit einer oder mehreren Phasen des Motors verbinden oder trenne.

4. Verfahren nach einem der vorhergehenden Ansprüche **dadurch gekennzeichnet, dass** die Ansteuerung mit einem erhöhten Moment entgegen der ursprünglichen Laufrichtung über eine Anzahl Schritte erzeugt wird, die einer Rotordrehung entsteht.

5. Verfahren nach einem der vorhergehenden Ansprüche **dadurch gekennzeichnet, dass** zum Ansteuern eines dreiphasigen Asynchronmotors eine Magnetisierung in die erste Richtung erfolgt, indem die erste und dritte Phase mit dem Versorgungsnetz verbunden werden, wonach eine Magnetisierung in die zweite Richtung erfolgt, indem die erste und zweite Phase oder die zweite und dritte Phase mit dem Versorgungsnetz verbunden werden.

## Claims

1. A method for triggering a multi-phase electric motor, in particular an asynchronous motor, the motor being triggered by the following steps for generating an increased torque:
- in a first step, a magnetization of the motor in a first direction is carried out
- in a second step, a magnetization of the motor in a second direction different from the first direction is carried in such a manner that an increased torque is generated,
wherein the steps one and two are repeated for generating an increased motor torque,
**characterized in that** triggering the motor is carried out during the start up when the motor stops due to increased load, wherein then triggering the motor is carried out in such a manner that first an increased torque opposite to the previous running direction is generated, whereupon the motor is stopped and triggered again with the original running direction.

2. The method according to claim 1, **characterized in that** the first and second magnetizing directions are offset to each other by at least 90° and not more than 180°.

3. The method according to claim 1 or claim 2, **characterized in that** triggering is carried out via electric switches, preferably triacs, which, depending on the zero crossings and the polarity of the supply voltage, temporarily connect or disconnect the alternating current supply voltage to one or more phases of the motor.

4. The method according to any one of the preceding claims, **characterized in that** triggering with an increased torque opposite to the original running direction is generated through a number of steps which corresponds to one rotor rotation.

5. The method according to any one of the preceding claims, **characterized in that** for triggering a three-phase asynchronous motor, a magnetization in a first direction is carried out by connecting the first and the third phase to the power supply, whereupon a magnetization in the second direction is carried out by connecting the first and second phases or the second and third phases to the power supply.

## Revendications

1. Procédé pour commander un moteur électrique polyphasé, en particulier un moteur asynchrone, dans lequel le moteur est commandé pour générer un couple élevé au moyen des étapes suivantes :
- lors d'une première étape s'opère une magnétisation du moteur dans une première direction.
- lors d'une deuxième étape s'opère une magnétisation du moteur dans une deuxième direction différente de la première direction, de façon à générer un couple élevé,
les étapes une et deux étant renouvelées pour générer un couple moteur élevé,
**caractérisé en ce que** la commande du moteur s'effectue au démarrage lorsque le moteur s'arrête en raison d'une charge plus élevée, la commande du moteur s'effectuant alors de façon à générer, dans un premier temps, un couple élevé dans le sens inverse du sens de rotation précédent, après quoi le moteur est arrêté et de nouveau commandé dans le sens de rotation initial.

2. Procédé selon la revendication 1, **caractérisé en ce que** la première et la deuxième direction de magnétisation sont décalées l'une par rapport à l'autre d'au moins 90° et au maximum de 180°.

3. Procédé selon la revendication 1 ou 2, **caractérisé en ce que** la commande s'effectue par l'intermédiaire de commutateurs électroniques, de préférence des triacs, qui connectent la tension d'alimentation alternative temporairement à une ou plusieurs phases du moteur ou la déconnectent en fonction des passages par zéro et de la polarité de la tension d'alimentation.

4. Procédé selon l'une des revendications précédentes, **caractérisé en ce que** la commande est générée avec un couple élevé en sens inverse de la direction de rotation initiale par l'intermédiaire d'un certain nombre d'étapes qui correspond à une rotation de rotor.

5. Procédé selon l'une des revendications précédentes, **caractérisé en ce que** s'opère, pour la commande d'un moteur asynchrone triphasé, une magnétisation dans la première direction en connectant la première et la troisième phase au réseau d'alimentation, puis une magnétisation dans la deuxième direction en connectant la première et la deuxième phase ou bien la deuxième et la troisième phase au réseau d'alimentation.
